# NOUVEAU FASCICULE DE BREVET EUROPEEN

(11) **EP 0 605 328 B2**
(45) Date de publication et mention de la décision concernant l'opposition: **04.04.2001**
(45) Mention de la délivrance du brevet: 22.04.1998
(21) Numéro de dépôt: 93403206.1
(22) Date de dépôt: 29.12.1993
(51) Int. Cl.: H02P 7/628, H02P 1/28, H02P 1/30, H02P 1/52

(54) **Alimentation optimale d'un moteur électrique**
Optimale Versorgung eines Elektromotors
Optimal power supply for electric motor

(30) Priorité: 30.12.1992 FR 9215909
(43) Date de publication de la demande: 06.07.1994
(73) Titulaire: TECUMSEH EUROPE SA, 38290 La Verpillière (FR)
(72) Inventeur: Bidaud, Francis, THOMSON-CSF, F-92402 Courbevoie Cedex (FR); Benoit, Sylvain, THOMSON-CSF, F-92402 Courbevoie Cedex (FR); Plisson, Jacques, THOMSON-CSF, F-92402 Courbevoie Cedex (FR); Morizot, Gérard, THOMSON-CSF, F-92402 Courbevoie Cedex (FR); Roth, Harald, THOMSON-CSF, F-92402 Courbevoie Cedex (FR); Huber, Adolf, THOMSON-CSF, F-92402 Courbevoie Cedex (FR)
(74) Mandataire: Albert, Claude

(56) Documents cités:
- WO-A-87/06403
- DE-A- 2 127 455
- DE-A- 3 542 753
- US-A- 4 249 120
- US-A- 4 477 761
- US-A- 4 533 986
- PATENT ABSTRACTS OF JAPAN vol. 7, no. 84 (E-169) (1229) 8 Avril 1983 & JP-A-58 012 583 (TSURUMI SEISAKUSHO K.K.) 24 Janvier 1983
- ELEKTRONIK, vol.38, no.7, 31 Mars 1989, MUNCHEN DE pages 116 - 118, XP24692 CLAUS UHRIG 'Trapez- oder Sinusansteuerung?'
- IEEE Transactions on Industry applications Vol.24 no.3(1988) COLBY Rpp. 462-469
- IEEE Trans. on Industry applications Vol 21 no.4(1985) KIRSCHEN D. pp. 610-616

## Description

La présente invention concerne un procédé d'alimentation optimale d'un moteur électrique à courant alternatif piloté par un convertisseur statique de fréquence continu/alternatif et alternatif/continu/alternatif, ainsi qu'un dispositif mettant en oeuvre ce procédé.

Le principe d'alimentation d'un moteur électrique au moyen d'une onde de tension alternative pouvant être de fréquence et d'amplitude variable est connu. Il s'agit de découper une source de tension continue de manière à obtenir aux bornes du moteur une onde ayant une forme synthétisée voulue afin d'adapter la tension d'alimentation du moteur à son couple de charge. Cette technique connue de l'homme du métier est décrite dans un ouvrage de Yvon PEERS Intitulé "Variation de vitesse". De tels dispositifs sont en général constitués d'un convertisseur de fréquence commandé par un procédé du type modulation de largeur d'impulsion (MLI), ce convertisseur étant placé entre la source d'alimentation et le moteur entraînant une application.

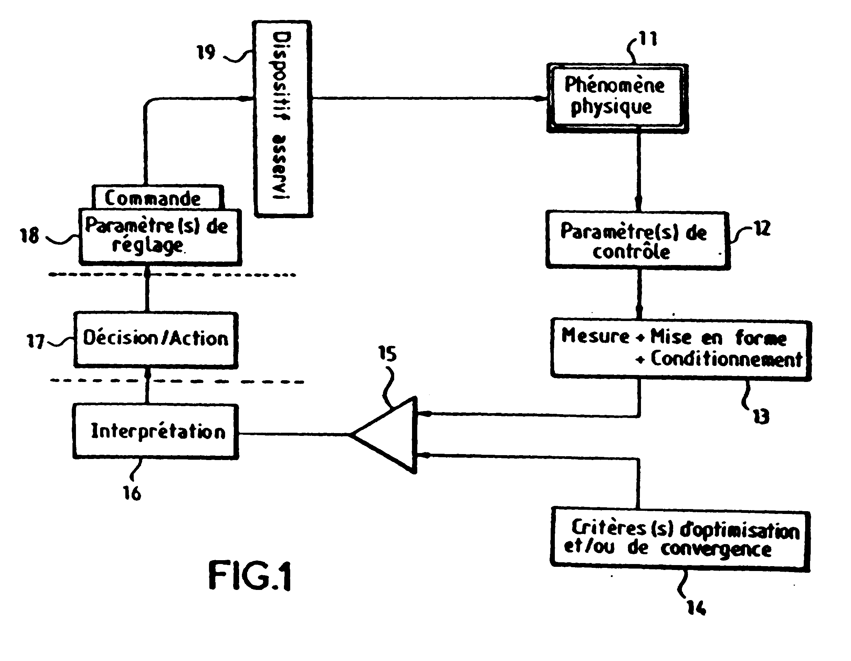

Dans le but d'obtenir un rendement de l'ensemble commande-moteur satisfaisant, il est connu de baser ce processus de gestion sur un ou plusieurs paramètres de contrôle traités par un module qui les interprète et élabore des paramètres de réglage des éléments du dispositif à partir de critères d'optimisation et/ou de convergence. Un synoptique montrant les différentes étapes de cette procédure est représenté sur la figure 1. A partir des phénomènes physiques 11 du dispositif, tels que courant, tension ou température, des paramètres de contrôle 12 sont mesurés puis mis en forme (bloc 13), comparés (bloc 15) à des valeurs de consigne ou critères d'optimisation et/ou de convergence (bloc 14), les résultats sont ensuite interprétés (bloc 16) puis une décision de modification 17 éventuelle d'un des paramètres de réglage 18 du dispositif est prise et par la commande correspondante envoyé au dispositif asservi (bloc 19).

Cet asservissement est en général réalisé par une variation de la fréquence en fonction des courants passant dans les transistors et est basé sur une loi du type Um = H(f, P1, P2, ..., Pn) dans laquelle Um est la tension synthétisée aux bornes du moteur, f la fréquence de cette tension et P1, P2, ..., Pn, des paramètres de contrôle. Ce type de loi standard dans les dispositifs connus, conduit bien souvent à une suralimentation du moteur et en conséquence à un surdimensionnement des composants, d'où un surcoût à la fabrication. Certaines lois quasi standards permettent de réduire sensiblement les risques de suralimentation sans pour autant éliminer d'une manière satisfaisante ces inconvénients.

Un autre inconvénient majeur de ce type d'asservissement est que ces paramètres doivent être mesurés par autant de capteurs et de lignes de connexion qu'il y a de paramètres de contrôle. D'autre part, l'optimisation qui est faite doit tenir compte des tolérances des composants comme celles imposées aux condensateurs, aux transistors de puissance ou aux caractéristiques physiques du moteur, et des dispersions dans la fabrication en série de ce moteur et des applications entraînées par celui-ci. Pour prendre en compte la somme de ces contraintes et ne pas risquer de nuire au fonctionnement de l'ensemble commande-moteur-application, l'asservissement est fait de manière à ce que le moteur fournisse un couple réel supérieur au couple maximum de la charge dans la plage de fonctionnement. Ce type d'asservissement s'avère insuffisant car il ne permet pas d'obtenir un rendement optimal dans tous les cas de figures inclus dans la plage de fonctionnement. Parallèlement, ces types d'asservissement conduisent la plupart du temps à des valeurs de courant d'appel du réseau durant le démarrage très élevées. Cela crée une dépense d'énergie superflue et un risque de non-conformité à certaines normes concernant les perturbations tolérables produites dans le réseau d'alimentation.

Une autre solution connue se rapprochant davantage des conditions de rendement optimum est décrite par exemple dans le brevet US -A- 4 249 120 et la demande de brevet PCT WO -A- 87/06403. Ces documents décrivent des systèmes de contrôle de l'alimentation d'un moteur à partir d'un pont redresseur suivi d'un convertisseur continu/alternatif commandé en fréquence. Pour chercher à obtenir un fonctionnement optimal, on se base sur la valeur du déphasage entre la tension et le courant absorbés par le moteur, ou du facteur de puissance du moteur ce qui est équivalent, et on asservit la tension de sortie du convertisseur à une valeur désirée dudit déphasage.

D'autres solutions connues concernent des systèmes de contrôle adaptatifs ayant pour objectif d'optimiser le rendement global d'un ensemble moteur-alimentation dans lequel le moteur est alimenté, à partir d'une source alternative redressée, par un onduleur. De telles solutions sont décrites, par exemple, dans un article de D.S. KIRSCHEN et al. "On-Line Efficiency Optimization of a Variable Frequency Induction Motor Drive" paru dans IEEE Transactions on Industry Applications, vol. IA-21, N°4, Mai/Juin 1985, pages 610-615, et dans un article de R.S. COLBY et al "An Efficiency-Optimizing Permanent Magnet Synchronous Motor Drive" paru dans IEEE Transactions on Industry Applications, vol. 24, N°3, Mai/Juin 1988, pages 462-469. Ces solutions consistent à rechercher une optimisation du rendement global à partir de paramètres prélevés au niveau de la source ou de l'entrée de l'onduleur, mais ne contrôlent pas de manière précise et étroite l'alimentation à l'entrée du moteur.

Les dispositifs connus ne permettent pas d'optimiser l'adéquation entre le dispositif électrique et le moteur piloté tout en satisfaisant les exigences de l'application à entraîner pour réaliser un ensemble relogeable intégrant les dispersions éventuelles à la fabrication des éléments de la chaîne électronique-moteur-application.

La présente invention s'affranchit de tels inconvénients grâce à un procédé d'alimentation permettant la recherche automatique constante du couple tension-fréquence optimal à délivrer au moteur à partir de différentes localisations sur le dispositif commande-moteur-application des paramètres de contrôle sans a priori sur la tension et la fréquence du type des lois citées plus haut.

La présente invention consiste en un procédé d'alimentation optimale d'une charge à caractère inductif couplée à une application, tel que défini dans les revendications 1 à 11.

La présente invention consiste aussi en un dispositif mettant en oeuvre ce procédé d'alimentation, tel que défini dans les revendications 12 et suivantes.

Ainsi, quelle que soit la phase de fonctionnement de l'ensemble (régime permanent, régime transitoire entre deux points de fonctionnement, démarrage, fluctuations autour d'un point de fonctionnement), celui-ci se trouve constamment dans un état correspondant à un rendement maximum.

La conséquence directe est que, l'accélération étant parfaitement maîtrisée, la puissance absorbée par le moteur est minimale à puissance requise par l'application donnée, ainsi que le courant d'appel sur la source d'alimentation au démarrage.

Cela permet d'augmenter la durée de vie du moteur et de maintenir ses performances, ainsi que la durée de vie des composants de puissance du convertisseur tout en optimisant les critères de sélection de ceux-ci. L'adéquation entre l'électronique de commande, le moteur et l'application est optimisée, et surtout, le procédé selon l'invention permet la modification des paramètres internes du système en fonction du temps et de l'usure des composants sans que l'ensemble ne soit déclassé pour mauvais rendement ou inconformité aux normes.

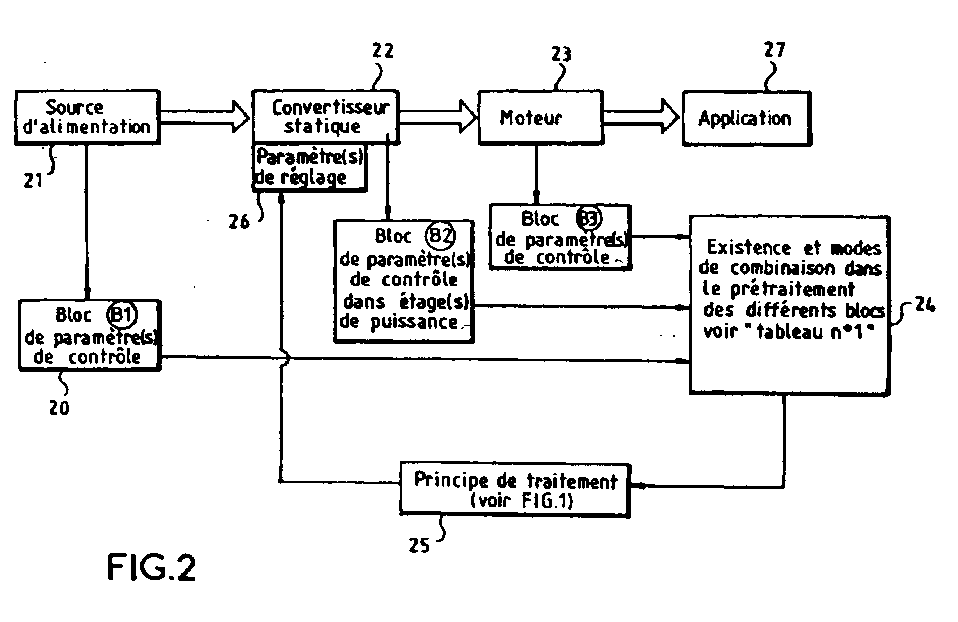

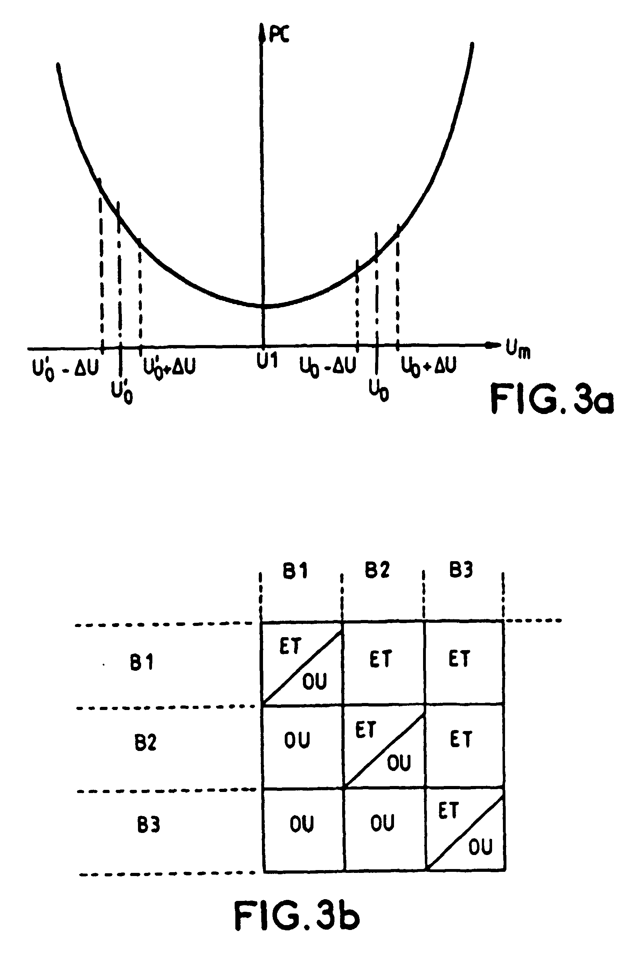

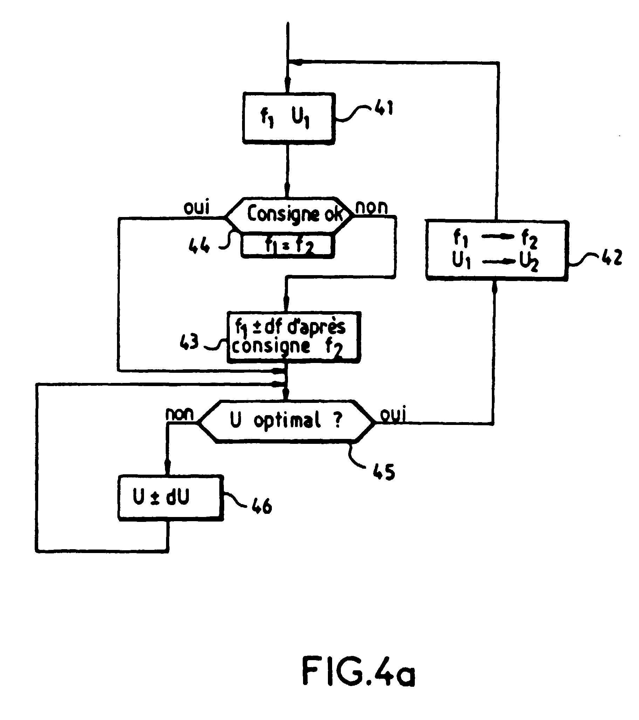

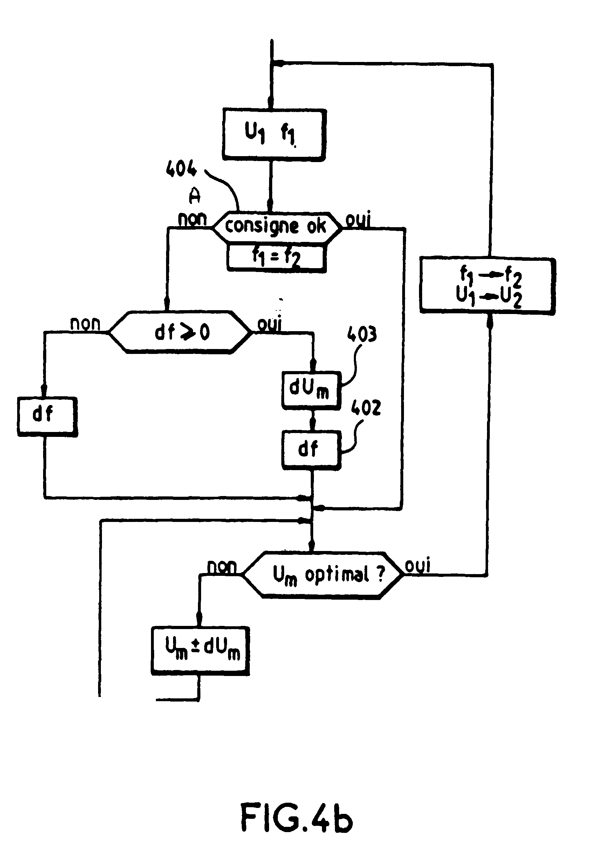

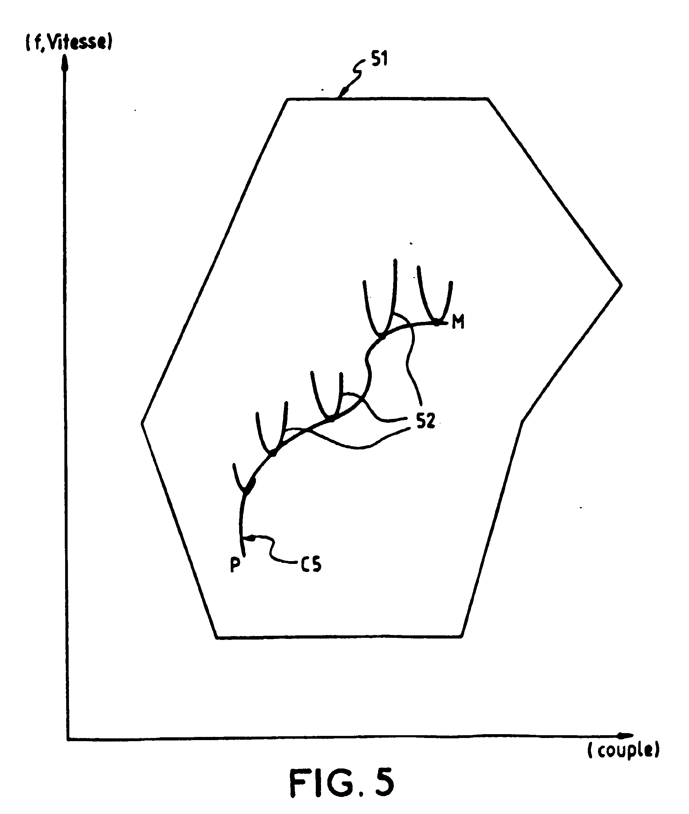

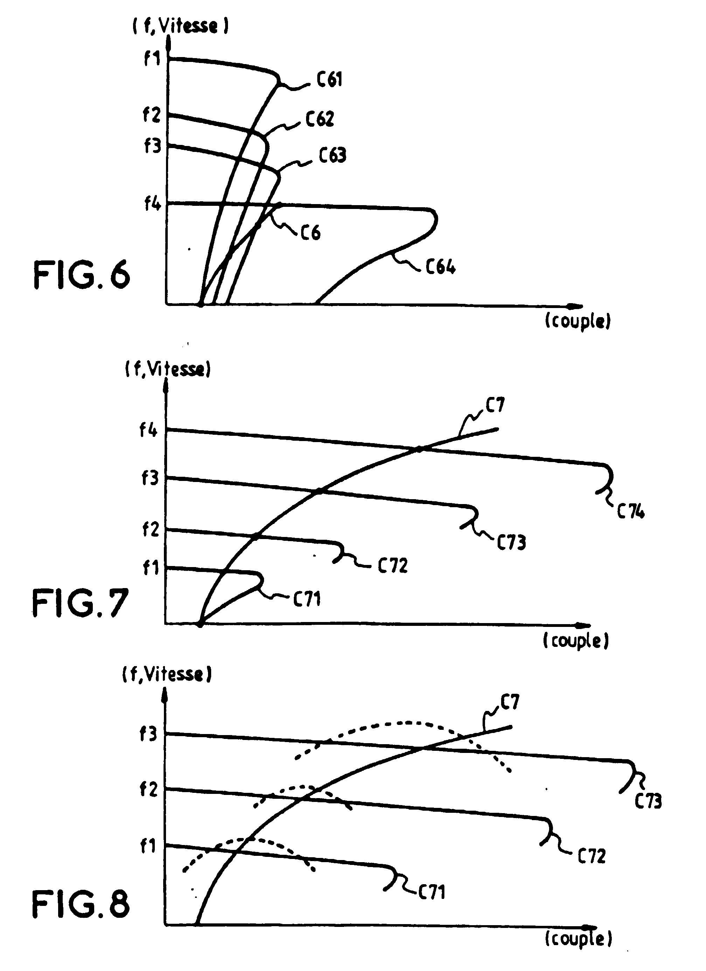

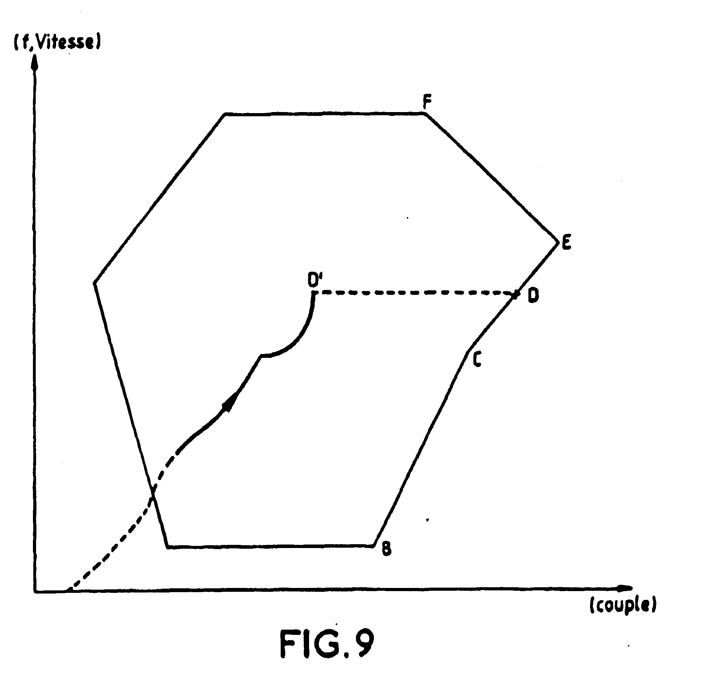

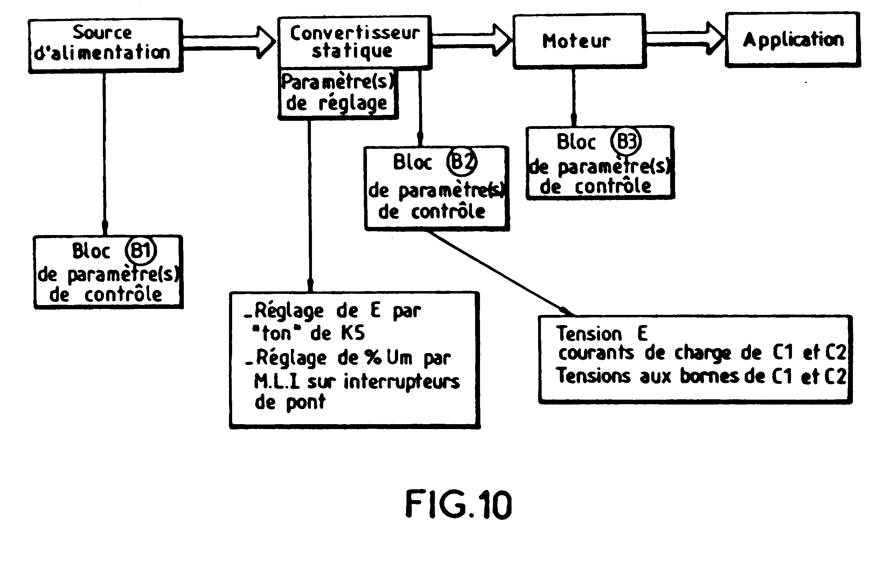

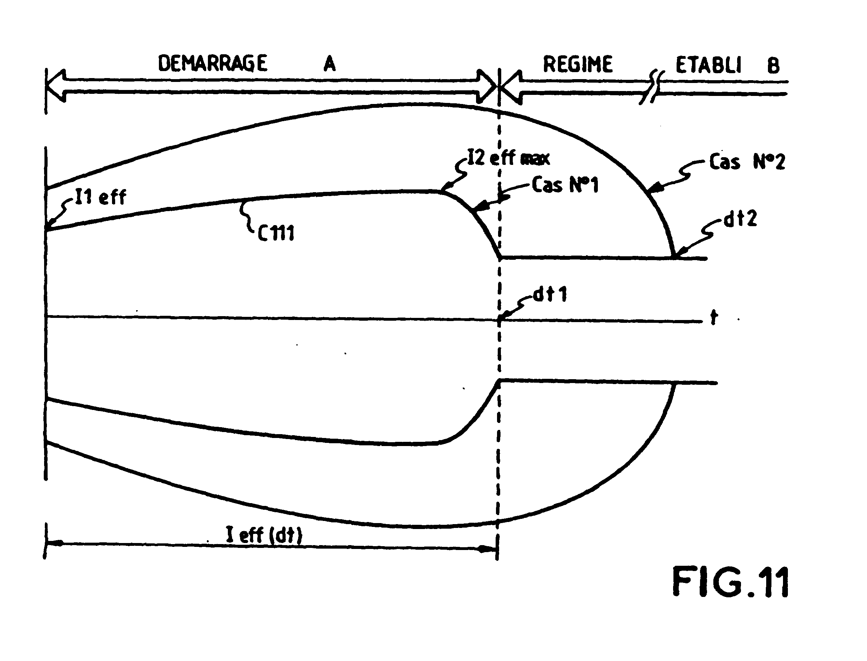

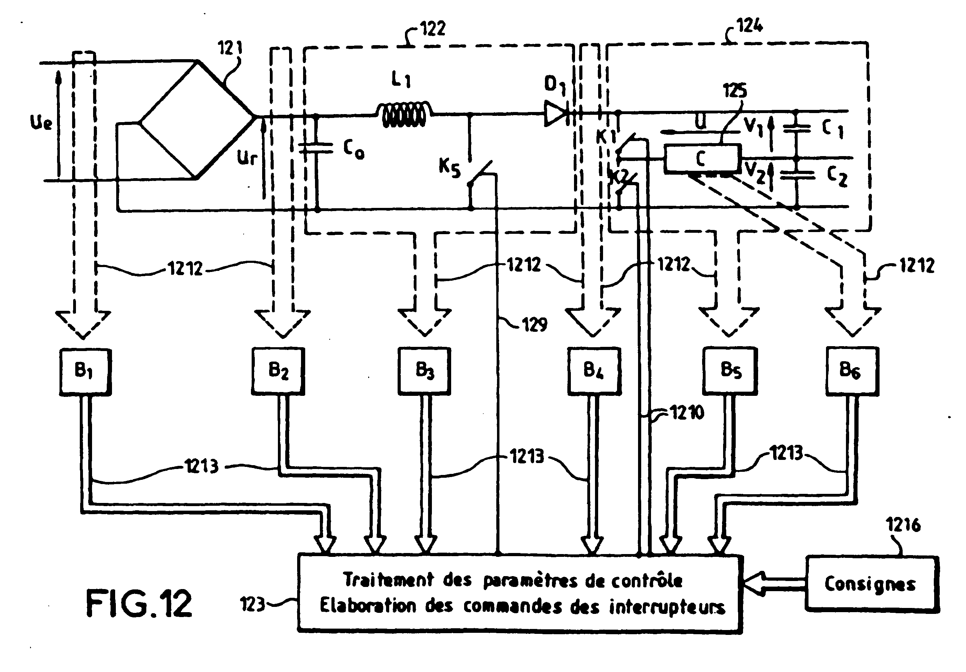

La présente invention sera mieux comprise et des avantages supplémentaires apparaitrons à la lecture de la description qui va suivre illustrée par les figures suivantes:
. la figure 1, déjà décrite, représente le principe général d'une procédure de contrôle de l'alimentation d'une charge,
. la figure 2 représente l'optimisation de l'alimentation auto-adaptative d'une charge à caractère inductif,
. la figure 3a représente un exemple de diagramme de la puissance absorbée par une charge en fonction de paramètres de contrôle,
. la figure 3b représente le tableau des modes de sélection des types de combinaisons possibles du traitement des blocs de paramètres sélectionnés,
. la figure 4a représente un logigramme selon une forme de l'invention du passage d'un régime permanent à un autre régime permanent pour des petites variations de la fréquence ou de la tension aux bornes d'une charge,
. la figure 4b représente un logigramme selon une forme de l'invention du passage d'un régime permanent à un autre régime permanent pour des grandes variations de la fréquences ou de la tension aux bornes d'une charge,
. la figure 5 représente le trajet suivi par des régimes transitoires successifs à l'intérieur de l'aire de fonctionnement d'une charge,
. la figure 6 représente le démarrage d'un moteur par diminution de la fréquence délivrée,
. la figure 7 représente le démarrage d'un moteur par augmentation de la fréquence délivrée,
. la figure 8 représente le démarrage d'un moteur par augmentation de la fréquence et les rendements optimaux correspondants,
. la figure 9 représente le trajet suivi par des régimes transitoires successifs en présence d'une phase tampon à l'intérieur de l'aire de fonctionnement,
. la figure 10 représente la prise de paramètres de contrôle et de réglage dans une configuration préférée,
. la figure 11 représente les enveloppes de courants de démarrage en fonction de l'état initial de charge des condensateurs,
. et la figure 12 représente un dispositif préférenciel convertisseur statique de fréquence permettant la mise en oeuvre du procédé selon l'invention.

Dans la description qui va suivre, l'invention est décrite appliquée à un moteur, mais il est bien évident que, par analogie, toute charge à caractère inductif peut être alimenté par le procédé selon l'invention, comme par exemple, les transformations statiques, variables ou non, ou encore les transformateurs alimentant un ou plusieurs moteurs électriques.

Sur la figure 2 est représenté le schéma de principe général de l'optimisation automatique. Des paramètres de contrôle 20 sont mesurés sur la source d'alimentation 21 et/ou sur le convertisseur 22 et/ou sur le moteur 23 auquel correspondent respectivement les blocs de paramètres B1, B2 et B3. Ces blocs sont ensuite pré-traités par un module 24 qui les selectionne, les pondère et les combine par des OU et des ET, puis les valeurs obtenues sont comparées à des valeurs de consigne ou des critères d'optimisation et/ou de convergence (bloc 25). Les résultats sont traduits en paramètres de réglage 26 qui sont appliqués aux commandes du convertisseur 22. Ce principe du procédé de recherche auto-adaptative offre la possibilité d'une commande plus rapprochée de l'ensemble commande-moteur, ce qui autorise une relogeabilité du dispositif commande-moteur sur plusieurs applications puisqu'elle s'affranchie de la mesure des grandeurs par capteurs sur l'application 27.

Le régime permanent du dispositif source d'alimentation-convertisseur-moteur-application correspond à un point de fonctionnement du dispositif et à une valeur de la tension Um et à une valeur de la fréquence f délivrées au moteur.

Comme représenté sur la figure 3a, certains des paramètres de contrôle (PC) du moteur à fréquence de l'onde moteur et à charge constantes de celui-ci ont une forme concave ou présentent un extrémum en fonction de la tension Um délivrée au moteur. Le minimum de puissance absorbée correspond au rendement maximal du moteur. Le minimum de courant absorbé est proche du rendement maximal du moteur, la différence étant due au cos(fi) apparent de ce moteur.

L'optimisation consiste à tenir compte, comme paramètre de contrôle dans les blocs B1, B2 et B3 des courants et des puissances respectives de la source d'alimentation, du convertisseur et du moteur, et, parmi ces courants et puissances, d'en sélectionner et de les combiner selon les règles du tableau de la figure 3b, avec ou sans pondération, afin d'asservir la tension Um délivrée au moteur. Selon la figure 3a, les paramètres de contrôle étant situés sur l'axe des ordonnées, la tension U1 étant la tension optimale à atteindre et la tension U0 ou U'0 la valeur de départ de Um, l'asservissement de Um à U1 se fait en fonction du sens de variation du ou des paramètres de contrôle selon la courbe à partir des valeurs U0 ou U'0. Conserver le courant absorbé comme paramètre de contrôle permet de réguler les variations de couple dues à une charge fluctuante, le courant absorbé correspondant à ces fluctuations de couple. En effet, lorsque la charge fluctue autour d'un point de fonctionnement, le courant absorbé présente des déformations comme par exemple des dissymétries entre alternances positives et négatives, et le fait de réguler ces dissymétries par asservissement des paramètres de réglage du convertisseur permet d'adapter le couple moteur au couple résistant et limite les vibrations de l'ensemble.

Dans le cas d'un régime transitoire, comme par exemple le passage d'un régime permanent correspondant à un premier point de fonctionnement, à un autre régime permanent correspondant à un second point de fonctionnement, du fait de modifications du comportement de l'application elle-même ou du fait de modifications demandées par l'utilisateur du dispositif, il est préférable de ne jamais sous-alimenter le moteur quelle que soit la variation de points de fonctionnement demandée ou constatée, sous peine de faire caler le moteur. Deux cas peuvent se présenter suivant les valeurs des variations df de la fréquence f et dUm de la tension Um. Ces variations de fréquences df et de tension dUm peuvent être faites en un ou plusieurs pas.

Un moteur fonctionnant dans des conditions normales est alimenté par une tension Um qui porte son couple de fonctionnement à une valeur de fonctionnement moins élevée que celle de son couple de décrochage pour la fréquence où il travaille. L'écart dC entre le couple de fonctionnement et le couple de décrochage est issu de la bonne adéquation entre les paramètres internes de définition du moteur et le procédé d'alimentation optimal en régime permanent selon l'invention.

Modifier la fréquence de l'onde d'alimentation du moteur par application d'un df>0 ou d'un df<0 sans modifier la valeur de tension Um délivrée au moteur a pour effet de diminuer, respectivement d'augmenter, l'écart dC.

Dans le cas où df>0 il est important de s'assurer que dC ne devienne pas trop petit, ce qui aurait pour effet de compromettre la stabilité du moteur. Deux cas peuvent se présenter:
. pour des valeurs suffisament petites de df, on peut faire varier la fréquence f et la tension Um dans un sens ou dans un ordre quelconque sans risquer de sous-alimenter le moteur. Ce premier cas est illustré par la figure 4a qui représente un logigramme du passage d'un régime permanent 1 correspondant à l'état 41 tension/fréquence (U1,f1) du moteur, à un autre régime permanent 2 correspondant à l'état 42 (U2,f2). La fréquence f1 est agrémentée d'une variation df (bloc 43) jusqu'à la valeur f2 d'après les consignes 44 demandées, soit par l'utilisateur, soit par gestion auto-adaptative lorsque l'application se modifie de son propre fait. La valeur de la tension U1 est agrémentée de dU jusqu'à la valeur U2 correspondant à la valeur optimale 45 de la tension du point de fonctionnement 2 de l'état (U2,f2).
. pour des valeurs plus grandes de df correspondant à un dC qui risqueraient de compromettre la stabilité du moteur, on doit accorder la priorité à dUm, afin de ne pas risquer de sous-alimenter le moteur. En effet, augmenter la fréquence d'une telle valeur df sans anticiper par une augmentation dUm, risque de sous-alimenter le moteur. C'est ce qu'illustre la figure 4b sur laquelle, lorsque la consigne entrée dans le bloc 404 est d'augmenter la fréquence (df>0), la tension est d'abord modifiée (bloc 403) puis la fréquence adaptée (bloc 402) puis ainsi de suite jusqu'à ce que soit atteinte la valeur désirée U2. Lorsque la consigne entrée dans le bloc 404 est de diminuer la fréquence (df<0), on applique la variation df demandée en premier, la tension peut être adaptée par la suite sans risque de sous-alimenter le moteur puisque celui-ci sera au contraire sur-alimenté un très court instant, l'état du système étant ramené très rapidement au point de rendement maximum grâce à la caractéristique décrite à partir de la figure 3a.

Un exemple d'application de ces logigrammes est représenté sur la figure 5. Sur cette figure est représentée l'aire de fonctionnement 51 du moteur constituée de points discrets 52 représentant les points de fonctionnement du dispositif (grandeur homogène à un couple en abscisse et à la vitesse de rotation du moteur en ordonnée), et la courbe C5 représente un trajet quelconque (PM) ou (MP), quand P et M sont les deux points de régime permanents constitués, d'une succession de régimes transitoires pour lequel en chaque point est pris en compte l'évolution du système selon l'un des logigrammes des figures précédentes 4a et 4b par gestion auto-adaptative décrites plus haut.

Il existe un régime transitoire particulier qui est le démarrage du moteur entrainant une application. Par analogie à d'autre charge à caractère inductif comme par exemple les charges de type transformateurs statiques, variable ou non, ou encore les transformateurs alimentant des moteurs électriques, cette phase de démarrage équivaut à la première mise en service de cette charge. Un des problèmes rencontrés par l'homme du métier au cours du démarrage est que les courants absorbés pour vaincre le couple résistant, ou courants d'appel, peuvent avoir des valeurs très élevées par rapport aux valeurs des courants absorbés au cours d'un régime permanent ou d'un régime transitoire entre deux régimes permanents. Ces pointes de courants absorbés peuvent polluer le réseau d'alimentation et/ou imposer des surdimensionnements aux composants du dispositif.

Après avoir vaincu le couple au démarrage, le moteur doit augmenter la vitesse d'entrainement de l'application jusqu'à un premier point de fonctionnement. Il existe deux moyens de contrôler l'accélération du moteur.

Le premier moyen est de procéder au démarrage par diminution de la fréquence comme cela est représenté par l'exemple du démarrage d'un moteur asynchrone de la figure 6 sur laquelle en abscisse sont représentés les couples et en ordonnée la fréquence du fondamental de la tension délivrée au moteur ou la vitesse du moteur. L'homme du métier comprendra que cette technique de démarrage par diminution de fréquences est inapplicable à des moteurs dépourvus de composantes asynchrones. A l'instant initial t0 est envoyé au moteur une fréquence de consigne f1 plus élevée que celle qui correspond au point de fonctionnement à atteindre, assortie de la tension convenable pour vaincre le couple résistant au démarrage. Puis, par gestion évolutive de la tension et de la fréquence, cette dernière diminue progressivement de f1 à f4 en passant par f2 et f3 jusqu'à ce que la valeur de la fréquence correspondant au premier régime permanent ou à une valeur très proche, soit atteinte. La courbe C6 est la caractéristique vitesse-couple d'une application quelconque de ces points de fonctionnements et les courbes C61, C62, C63 et C64 les caractéristiques vitesse-couple du moteur. La loi d'évolution des couples (Um,f) en fonction du temps peut être choisie en fonction de la loi d'accélération voulue.

Le second moyen est de procéder au démarrage par augmentation de la fréquence comme représenté par l'exemple du démarrage d'un moteur asynchrone de la figure 7 sur laquelle sont représentés en abscisse les couples et en ordonnée la fréquence du fondamental de tension aux bornes du moteur ou la vitesse du moteur. A l'instant initial t0 est envoyée au moteur une onde de tension de fréquence f1 plus basse que celle correspondant au point de fonctionnement à atteindre, assortie de la tension correspondante afin de vaincre le couple résistant au démarrage. Puis, par gestion évolutive, la fréquence est augmentée jusqu'à f4 en passant par f2 et f3 jusqu'à ce que soit atteinte la valeur correspondant au premier régime permanent à atteindre, la courbe C7 étant la caractéristique vitesse-couple d'une application et les courbes C71, C72, C73 et C74 les caractéristiques vitesse couple du moteur. La tension est adaptée à chaque instant par le procédé selon l'invention pour assurer la plus juste alimentation du moteur, cela permettant de contrôler en permanence la puissance, le courant absorbé et l'accélération si nécessaire.

Un avantage supplémentaire découle du fait de procéder au démarrage par l'augmentation de la fréquence. En effet, cela permet de faire travailler plus rapidement le moteur à une vitesse supérieure à celle de son couple de décrochage et d'asservir la tension du moteur en le faisant travailler au proche voisinage de son rendement optimal, y compris en phase d'accélération. Cet asservissement permet de réduire d'avantage la puissance absorbée au démarrage et donc de réduire les courants d'appel sur le réseau et dans le dispositif au démarrage. Le sommet des courbes en lignes pointillées de la figure 8 représente le rendement optimal du moteur.

La fin du démarrage peut être décidée par deux moyens différents:
. soit une temporisation est fixée avec une marge de sécurité d'après les connaissances du comportement et des dispersions à la réalisation des caractéristiques du processus à piloter,
. soit grâce au courant ou à une grandeur physique équivalente, la fin de la phase d'accélération étant détectée lorsque le courant appelé par le moteur décroît.

Après la phase d'accélération, deux cas peuvent être envisagés:
. le couple du premier point de fonctionnement correspond au couple de fin de phase d'accélération,
. ou le couple du premier point de fonctionnement est différent du couple de fin de phase d'accélération, comme par exemple dans le cas de l'amorçage d'une pompe lors de sa première mise en service, d'un circuit frigorifique quand le différentiel de pression s'établit avec un retard par rapport à l'instant de démarrage, d'un embrayage différé, d'une pompe centrifuge, de machines outils comme par exemple un tour ou une fraiseuse pour lequel le démarrage s'effectue l'outil non engagé, ou de tout dispositif à mise en activité par effet centrifuge.

A la fin de la phase d'accélération, si le couple fourni par le moteur était inférieur au couple résistant de la charge correspondant à un premier point de fonctionnement et qu'aucune intervention n'était effectuée sur l'alimentation, le moteur n 'étant pas suralimenté du fait de la prise en compte de l'évolution de l'état du système durant la phase d'accélération telle que décrite plus haut, le moteur risquerait de caler. Deux techniques existent qui permettent d'éviter ce problème.

La première consiste, lorsque les paramètres du premier point de fonctionnement correspondant au régime permanent sont connus ou prédictibles, à appliquer directement au moteur la tension Um correspondant à ce point de fonctionnement à la fin de la phase d'accélération. Cette technique est envisageable, que l'on ait procédé par augmentation ou par diminution de la fréquence comme cela est explicité plus haut.

La seconde technique, dans le cas où les paramètres du premier point de fonctionnement correspondant au régime permanent ne sont pas connus ou pas prédictibles, est de constituer une phase tampon entre la phase d'accélération et la procédure de gestion des régimes permanents. A l'intérieur de l'aire de fonctionnement, un point D' étant à atteindre en régime permanent tel que représenté sur la figure 9 et pour lequel les paramètres descriptifs sont inconnus, les paramètres correspondant à ceux du point D sont choisis par défaut. Le couple correspondant au point D est le plus élevé susceptible d'être atteint à la vitesse de rotation requise en régime permanent. Le moteur aux bornes duquel sera appliquée la tension UmD correspondant au couple du point D se trouvera suralimenté pendant cette phase tampon, mais la promptitude d'intervention du procédé de gestion des régimes permanents selon l'invention décrite à partir de la figure 3a permettra d'atteindre rapidement les conditions d'alimentation appropriés du point D', point de fonctionnement réel de l'application et du moteur, auquel correspond la tension UmD'< UmD. La durée de suralimentation du moteur sera très courte, que l'on procède par augmentation ou diminution de la fréquence. Dans le cas plus général des charges à caractère inductif du type transformateurs statiques, variables ou non, ou encore alimentant des moteurs électriques, la première mise en service comporte une phase tampon précédant la procédure des régimes permanents, pendant laquelle est appliquée à ces charges une tension correspondant à un point de fonctionnement dont la puissance est la plus élevée susceptible d'être atteinte en régime permanent.

Dans un mode de configuration préférentiel, tel que celui représenté sur la figure 9, il est possible, dans les deux cas précédents, d'ajuster la fréquence pour qu'en fin de phase d'accélération celle-ci soit la plus proche possible de la fréquence fmD' correspondant au point D', de sorte que la variation due au changement de fréquence soit négligeable, et cela que l'on procède par augmentation ou par diminution de la fréquence.

Un autre mode de réalisation préférentielle consiste à choisir non pas le point D comme point potentiel "d'arrivée", mais un point plus compatible avec les exigences de temps d'accélération. En fonction de la vitesse à atteindre après accélération, tout point situé sur la portion (B, C, D, E, F) pourra être choisi, puisque cette portion représente le lieu des couples maximums envisageables en fonction de la vitesse de rotation. Un critère de choix retenu peut être la minimisation de la suralimentation du moteur. Pour atteindre ensuite le point de fonctionnement réel (point D' sur la figure 9) on utilise la procédure telle que décrite plus haut à partir de la figure 5.

Pour la mise en oeuvre de la présente invention, une forme d'onde appliquée aux bornes du moteur particulièrement bien adaptée à un bon rendement de celui-ci et de son dispositif d'alimentation est une onde de tension alternative dont une demi période a une forme trapézoïdale isocèle, le palier ayant une durée de T/6, lorsque T est la période de l'onde. La fréquence de découpage durant les rampes ascendantes et descendantes de la demi-période est de préférence supérieure à 10 kHz.

Une structure préférentielle de convertisseur statique pour la mise en oeuvre de la présente invention est représentée par la figure 12 et est la combinaison d'un filtre actif élévateur de tension et d'un élément onduleur abaisseur de tension apparent vu par le moteur.

Un tel convertisseur statique de fréquence est commandé par un élément de traitement de paramètres de contrôle et d'élaboration de commandes 123 auquel sont appliquées des consignes 1216 et comporte un filtre actif 122 aux bornes d'un moyen onduleur 124 et alimente une charge 125. Un moyen redresseur du type pont à diodes 121 prélève une onde d'alimentation Ue pour délivrer une onde redressée Ur aux bornes du filtre actif 122. Ce filtre actif est constitué d'une inductance L1 en série avec une diode D1, toutes deux reliées à la masse par un condensateur CO et un interrupteur K5 commandé par l'élément 123. Ce filtre actif 122 délivre une tension E aux bornes du moyen onduleur 124 qui comprend au moins un pont complet dont un des bras comporte deux condensateurs C1 et C2 et l'autre bras deux interrupteurs K1 et K2, la charge 125 du type moteur est connectée entre les interrupteurs K1 et K2 d'une part et entre les condensateurs C1 et C2 d'autre part. Grâce à l'élément 123 commandant les interrupteurs par l'intermédiaire des connections 129 et 1210 et mettant en oeuvre un procédé de type MLI, le moyen onduleur 124 délivre aux bornes du moteur 125 une tension Um. Cette tension Um comporte une composante UmBF qui est la tension du point de vue des basses fréquences. Les condensateurs C1 et C2 ont des tensions respectives V1 et V2 à leurs bornes. Ce dispositif alimente un moteur monophasé mais peut être étendu à l'alimentation d'un moteur polyphasé.

Les blocs B1 à B6 sont les paramètres de contrôle traités par l'élément 123 par l'intermédiaire de connections 1212 et sont des grandeurs physiques mesurées au niveau de la source d'alimentation Ue, de la sortie du moyen redresseur 121, du filtre actif 122, du moyen onduleur 124 et/ou du moteur 125. Ces grandeurs physiques mesurables peuvent être des tensions, des courants, des puissances, des températures, des déplacements, des vitesses, des accélérations, des pressions, des champs magnétiques et/ou des champs électriques. De préférence, un paramètre de contrôle sera une valeur image de la déformation dUmBF de la tension UmBF aux bornes du moteur.

Grâce à cette structure, le filtre actif 122 peut être commandé de manière à se comporter comme un élévateur de tension et l'élément onduleur 124 peut être commandé de manière à ce que le flux magnétique du moteur 125 se comporte comme si l'élément onduleur 124 se comportait en abaisseur de tension.

Parmi les nombreux avantages de cette structure, certains sont particulièrement intéressants, comme le fait que cette structure ne pollue pas le réseau, qu'elle permet de s'affranchir totalement des fluctuations de la source d'alimentation Ue du convertisseur et offre comme paramètres de réglage, en plus des différentes grandeurs physiques mesurables évoquées plus haut le taux d'ondulation de la tension aux bornes des condensateurs de l'élément onduleur, celui-ci donnant l'image des ondulations du couple résistant d'une charge fluctuante.

Les paramètres de réglage peuvent être, quant à eux, le temps de fermeture ton de l'interrupteur K5 du filtre actif afin d'ajuster la tension continue E aux bornes de l'élément onduleur, ainsi que le pourcentage apparent %Um de E vu par le moteur grâce au procédé MLI asservissant les interrupteurs de l'élément onduleur.

La figure 10 représente la localisation des paramètres de contrôle et de réglage qui apparaissent dans le cas d'une structure de convertisseurs telle que décrite précédemment.

Grâce à un tel dispositif, dans le cas des régimes permanents, ajuster la tension aux bornes du moteur à partir de la forme concave du courant et de la puissance absorbée par le moteur, tel que représenté sur la figure 3a, correspond à ajuster la tension continue E et %Um en fonction du sens de variation des paramètres de contrôle PC choisis. Il existe une quasi infinité de choix pour E et %Um conduisant à une même tension UmBF aux bornes du moteur, puisque l'on peut, soit découper d'avantage une tension E plus élevée, soit moins découper une tension E plus faible. Le choix est fait selon la prise en compte de deux critères, le taux de déformation de la tension aux bornes du moteur et la minimisation des pertes dans les éléments de puissance du convertisseur correspondant à E minimum.

Dans le cas des régimes transitoires, une telle structuré de convertisseur permet, indépendamment de la compensation de fluctuation de l'application, d'élever E pour ensuite asservir %Um en offrant la souplesse nécessaire pour suivre les régimes transitoires d'un point de fonctionnement à un autre, tout en continuant à délivrer une tension optimale au moteur, l'optimisation de E pouvant se faire plus lentement au fur et à mesure du déroulement du processus, ou au retour d'un nouveau régime permanent.

D'autre part, dans le cas du démarrage du moteur, à t=0, instant effectif de démarrage du moteur, une telle structure permet de délivrer dès cet instant la tension UmBF nécessaire au moteur pour vaincre le couple résistant au démarrage en pré-chargeant les condensateurs C1 et C2 de l'élément onduleur jusqu'à la valeur E désirée indépendamment de l'état de la source d'alimentation, soit par la seule action de l'interrupteur K5 de l'élévateur 122 tandis que les interrupteurs K1 et K2 de l'élément onduleur 124 sont maintenus ouverts, soit par l'action combinée de K5 et de K1 et K2 pilotés par la procédure MLI de manière à délivrer au moteur une onde de rapport cyclique 1/2, le moteur restant alors à l'arrêt puisqu'il se comporte comme s'il voyait une tension UmBF nulle. Il suffit par la suite de faire évoluer %Um pour respecter une des lois d'évolution décrite plus haut. Cette caractéristique peut être étendue par analogie à toutes les charges à caractère inductif en permettant de produire le courant et/ou la puissance nécessaires lors de la première mise en service de la,charge.

Un avantage supplémentaire de la présente invention est qu'elle assure la répétitivité du démarrage dans des conditions optimales puisque quel que soit l'état de la source d'alimentation, la tension délivrée au moteur est garantie, et les courants d'appel sont ainsi minimisés.

La figure 11 illustre le principe du démarrage A et des courants appelés pour parvenir au régime établi B. Lorsque les conditions initiales de charge des condensateurs C1 et C2 ont été remplies selon le principe évoqué plus haut, le temps de démarrage est dt1 et la courbe C111 représente l'enveloppe du courant instantané Imeff appelé. Dans le cas où cès conditions initiales ne sont pas respectées, les courants efficaces l1eff, Imeff et 12eff augmentent et avec eux le temps nécessaire au démarrage dt1 qui devient dt2.

Un autre avantage de la présente invention peut être de démarrer avec la stricte tension E nécessaire aux bornes des condensateurs C1 et C2 afin d'assurer le confort des interrupteurs de puissance de l'élément onduleur. D'autre part, procéder suivant la présente invention permet d'éviter d'avoir recours à une augmentation superflue des valeurs de C1 et C2 dans le seul but du démarrage. En effet, si le démarrage est effectué par augmentation de fréquence, les premières fréquences utilisées peuvent imposer des fortes valeurs de variations dV aux bornes des condensateurs C1 et C2.

L'énergie fournie àux condensateurs C1 et C2 subit directement les ondulations du réseau redressé et un moyen simple de maîtriser cet effet consiste à synchroniser la commande des interrupteurs de l'élément onduleur pour qu'à la fréquence fondamentale de tension moteur, l'énergie maximum soit demandée aux condensateurs dans les plages de temps où le réseau est élevé, ce qui revient à tirer le meilleur parti de C1 et C2 au démarrage.

Le second procédé dans le cas d'un démarrage par diminution de fréquence permet de faire travailler C1 et C2 dans des conditions limitant la variation dV de tension à leurs bornes. On peut alors, grâce à l'action combinée des fonctions élévateur et abaisseur apparent, réduire E pour une même tension Um à délivrer au moteur, la variation dV étant plus faible sur C1 et C2.

Dans le cas où il existe un écart de couple entre la fin de l'accélération et le premier point de régime permanent, la présente invention permet une grande souplesse de suivi sans influence néfaste sur la source d'alimentation, y compris lorsque le couple demandé au moteur une fois l'inertie vaincue, est inconnue.

Il sera possible de faire en sorte que E ait une valeur suffisamment élevée pour permettre de faire fonctionner le moteur, y compris dans les conditions les plus rudes de l'aire de fonctionnement telle que représenté sur la figure 9. De plus, en fin de phase d'accélération, %Um peut être ajusté à la valeur correspondant au point choisi correspondant au couple le plus élevé sur le contour de l'aire de fonctionnement. Par la suite, la quasi instantanéité d'asservissement de %Um grâce au procédé selon l'invention pour obtenir la tension Um optimale pour les régimes permanents, permet de réduire le temps pendant lequel le moteur est suralimenté.

Le procédé d'alimentation optimale ainsi que le dispositif le mettant en oeuvre selon la présente invention s'appliquent à tous les types de charges à caractère inductif telle que le rapport de la puissance qu'elles fournissent à la puissance qu'elles absorbent, présente à fréquence donnée un maximum en fonction de la tension UmBF qui leur est délivrée en entrée, comme par exemple les moteurs électriques à courant alternatifs asynchrones, synchrones, asynchrones synchronisés, avec ou sans contribution à caractère reluctance variable, monophasé ou polyphasés, et par analogie avec les moteurs électriques cités, les transformateurs statiques, variable ou non, ou encore les transformateurs alimentant des moteurs électriques.

## Revendications

1. Procédé d'alimentation optimale d'une charge (23; 125) à caractère inductif couplée à une application (27), cette charge (23; 125) étant pilotée par un convertisseur statique (122; 124) commandé par un module électronique (123) constituant le dispositif électronique de commande de la charge ledit convertisseur comportant, un onduleur (124) alimenté par un filtre actif (122) ledit procédé consistant à mesurer des paramètres de contrôle (PC) sur ladite charge, ledit convertisseur statique ou une source d'alimentation (21), à effectuer une combinaison et/ou une pondération desdits paramètres de contrôle et à en déduire des paramètres de réglage de l'alimentation à partir de critères prédéterminés, ledit procédé étant caractérisé en ce qu'il comporte les étapes consistant à :
- déduire le sens de variation, autour d'un extremum correspondant à une puissance minimale absorbée par la charge (23; 125) d'un ou plusieurs desdits paramètres de contrôle pondérés et/ou combinés
- déterminer des paramètres de réglage à partir dudit sens de variation de manière à, à chaque instant:
• commander un réglage de la tension (E) fournie par ledit filtre actif, supérieure ou égale à la tension crête de la source d'alimentation (21), à une valeur choisie en fonction du taux de déformation de la tension aux bornes du moteur et de la minimisation des pertes dans les éléments de puissance du convertisseur correspondant à la tension continue (E) minimum ; et
• commander un réglage du pourcentage de la tension continue (E) fourni comme tension de charge (Um) par ledit onduleur à ladite charge de manière que ladite tension de charge (Um) rende la puissance absorbée par ladite charge minimale.

2. Procédé selon la revendication 1, caractérisé en ce que la phase de démarrage pour atteindre le premier régime permanent s'effectue par augmentation (df) de la fréquence de ladite tension (Um) délivrée à la charge, en un ou plusieurs pas.

3. Procédé selon la revendication 1, caractérisé en ce que le changement d'un point de fonctionnement (U1, f1) à un autre (U2, f2) par consigne de l'utilisateur (1216), s'effectue par modification (df) de la fréquence de ladite tension (Um) puis par modification (dU) de la tension si la variation de fréquence (df) est négative, et par modification (dU) de la tension puis par modification (df) de la fréquence si la variation de fréquence (df) est positive.

4. Procédé selon la revendication 1, caractérisé en ce que le changement d'un point de fonctionnement (U1, f1) à un autre (U2, f2) par consigne de l'utilisateur (1216), s'effectue sans ordre de préférence entre la variation (df) de la fréquence et celle (dU) de tension, lorsque la variation de fréquence (df) est positive et de faible valeur.

5. Procédé selon la revendication 1, caractérisé en ce que le changement d'un point de fonctionnement (U1, f1) à un autre (U2, f2) s'effectue par modification de l'application (27) elle-même.

6. Procédé selon l'une quelconque des revendications 1 ou 3 à 5, caractérisé en ce que la phase de démarrage pour atteindre le premier régime permanent s'effectue par diminution (df) de la fréquence de ladite tension (Um), en un ou plusieurs pas.

7. Procédé selon l'une des revendications 2 ou 6, caractérisé en ce que la décision de fin de phase de démarrage s'effectue quand le courant au travers de la charge (23, 125) décroît.

8. Procédé selon l'une des revendications 2 ou 6, caractérisé en ce que, lorsque la charge présente un caractère inductif du type transformateur statique, variable ou non, ou encore transformateur alimentant un ou plusieurs moteurs électriques, la première mise en service comporte une phase tampon précédant la procédure des régimes permanents, pendant laquelle est appliquée à cette charge (23, 125) une tension correspondant à un point de fonctionnement (D) dont la puissance est la plus élevée susceptible d'être atteinte en régime permanent.

9. Procédé selon l'une des revendications 2 ou 6, caractérisé en ce que lorsque la charge est un moteur électrique, le démarrage comporte une phase tampon entre la phase d'accélération et la procédure des régimes permanents, pendant laquelle est appliquée au moteur (125) une tension correspondant au couple du point de fonctionnement (D) qui est le couple le plus élevé susceptible d'être atteint à la vitesse de rotation requise en régimes permanents.

10. Procédé selon l'une quelconque des revendications précédentes, caractérisé en ce que la charge (23; 125) à caractère inductif auquel il s'applique est un moteur électrique à courant alternatif asynchrone, synchrone, asynchrone synchronisé, avec ou sans contribution à caractère réluctance variable, monophasé ou polyphasé, ou un transformateur statique, variable ou non.

11. Procédé selon l'une quelconque des revendications précédentes, caractérisé en ce que la forme d'onde délivrée aux bornes de la charge a la forme d'un trapèze isocèle dont le palier a une durée de T/6, T étant la période de l'onde synthétisée aux bornes de la charge.

12. Dispositif d'alimentation optimale d'une charge (23; 125) à caractère inductif couplée à une application (27), ledit dispositif mettant en oeuvre le procédé selon l'une quelconque des revendications précédentes et comprenant un convertisseur statique de fréquence (122, 124) formé d'un filtre actif (122) aux bornes d'un moyen onduleur (124) et un module électronique (123) de commande contrôlant ledit convertisseur, caractérisé en ce que ledit filtre actif est un filtre actif élévateur de tension (122), qui est constitué d'une inductance (L1) en série avec une diode (D1), le point de jonction entre inductance et diode étant relié à la masse par un premier interrupteur (K5), en ce que ledit moyen onduleur (124) est constitué d'au moins un pont complet dont un des bras comporte deux condensateurs (C1, C2) et l'autre bras deux interrupteurs (K1, K2), en ce que ledit module électronique (123) est connecté pour commander tous lesdits interrupteurs (K1, K2, K5), ledit module comportant à cet effet des premiers moyens pour mesurer des paramètres de contrôle (PC) sur ladite charge, ledit convertisseur statique ou ladite source d'alimentation, des seconds moyens pour effectuer une combinaison et/ou pondération desdits paramètres de contrôle et déduire le sens de variation, autour d'un extremum correspondant à une puissance minimale absorbée par la charge (23; 125), d'un ou plusieurs desdits paramètres de contrôle pondérés et/ou combinés, et des troisièmes moyens pour fournir audit convertisseur des paramètres de réglage (26) commandant ledit premier interrupteur (K5) pour régler la tension continue (E) fournie par ledit filtre actif, supérieure ou égale à la tension crête de la source d'alimentation (21), à une valeur choisie en fonction du taux de déformation de la tension aux bornes du moteur et de la minimisation des pertes dans les éléments de puissance du convertisseur correspondant à la tension continue (E) minimum, et lesdits autres interrupteurs (K1,K2) pour régler le pourcentage de la tension continue (E) fourni comme tension de charge (Um) par ledit onduleur à ladite charge de manière que ladite tension de charge (Um) rende la puissance absorbée par ladite charge minimale, et en ce qu'un condensateur (CO) est relié entre la borne d'entrée du filtre actif (122) et la masse.

13. Dispositif selon la revendication 12, caractérisé en ce que le moyen onduleur (124) ne comporte qu'un seul pont complet et alimente une charge monophasée (5).

14. Dispositif selon la revendication 12, caractérisé en ce que le moyen onduleur (4) comporte deux ponts complets et alimente une charge diphasée.

15. Dispositif selon l'une quelconque des revendications 12 à 14, caractérisé en ce qu'il comporte des moyens de connexion (1212) pour fournir audit module (123) lesdits paramètres de contrôle (PC) constitués par la puissance absorbée par la charge (125), le courant traversant ladite charge, les variations de tension (dV1, dV2) aux bomes desdits condensateurs (C1, C2) et/ou la valeur image de la déformation (dUmBF) de la composante basse fréquence (UmBF) de la tension aux bornes de la charge (125).

16. Dispositif selon l'une quelconque des revendications 12 à 15, caractérisé en ce que ledit module électronique (123) est constitué pour, avant la phase de première mise en service, soit agir seulement sur l'interrupteur (K5) du filtre actif (122) en maintenant les interrupteurs (K1, K2) du moyen onduleur (124) ouverts, soit agir de façon combinée sur l'interrupteur (K5) du filtre actif (122) et sur les interrupteurs (K1, K2) du moyen onduleur (124) de manière à précharger lesdits condensateurs (C1, C2) à une juste tension (E) indépendante de la source d'alimentation et à délivrer à la charge une onde de rapport cyclique 1/2.

17. Dispositif selon la revendication 16, caractérisé en ce que ledit module électronique (123) est prévu pour que ladite précharge des condensateurs (C1, C2) soit celle nécessaire pour vaincre le couple résistant au démarrage lorsque ladite charge est un moteur électrique.

## Patentansprüche

1. Verfahren zur optimalen Speisung einer Last (23; 125) induktiven Charakters, die an eine Applikation (27) gekoppelt ist, wobei diese Last (23; 125) von einem statischen Wandler (122, 124) gesteuert wird, der durch einen elektronischen Modul (123) gesteuert wird und die elektronische Steuervorrichtung für die Last bildet, wobei der Wandler einen von einem aktiven Filter (122) gespeisten Wechselrichter (124) enthält, wobei das Verfahren darin besteht, Kontrollparameter (PC) an der Last, dem statischen Wandler oder einer Speisestromquelle (21) zu messen, dann eine Verknüpfung und/oder Gewichtung der Kontrollparameter durchzuführen und daraus Regelparameter für die Speisung ausgehend von vorbestimmten Kriterien abzuleiten, dadurch gekennzeichnet, daß das Verfahren die folgenden Schritte enthält:
- Ableitung der Richtung der Veränderung um einen Extremwert herum entsprechend einer von der Last (23; 125) absorbierten Mindestleistung ausgehend von einem oder mehreren der gewichteten und/oder verknüpften Kontrollparameter;
- Bestimmung der Regelparameter ausgehend von dieser Richtung der Veränderung derart, daß in jedem Augenblick
* eine Regelung der von dem aktiven Filter gelieferten Spannung (E) größer oder gleich dem Spitzenwert der Spannung der Stromquelle (21) auf einen Wert gesteuert wird, der abhängig vom Verformungsgrad der Spannung an den Klemmen des Motors und der Minimierung der Verluste in den Leistungsbauelementen des Wandlers entsprechend der minimalen Gleichspannung (E) gewählt wird,
* und eine Regelung des Teils der als Lastspannung (Um) vom Wechselrichter an die Last gelieferten Gleichspannung (E) so gesteuert wird, daß die Lastspannung (Um) die von der Last aufgenommene Leistung minimisiert.

2. Verfahren nach Anspruch 1, dadurch gekennzeichnet, daß die Anfahrphase bis zum ersten Dauerbetriebszustand durch Erhöhung (df) der Frequenz der an die Last gelieferten Spannung (Um) in einem oder mehreren Schritten erfolgt.

3. Verfahren nach Anspruch 1, dadurch gekennzeichnet, daß der Übergang von einem Arbeitspunkt (U1, f1) zu einem anderen Arbeitspunkt (U2, f2) durch Weisung des Benutzers (1216) mittels Veränderung (df) der Frequenz der Spannung (Um) und dann mittels Veränderung (dU) der Spannung erfolgt, wenn die Veränderung der Frequenz (df) negativ ist, sowie durch Veränderung (dU) der Spannung und dann durch Veränderung (df) der Frequenz, wenn die Veränderung der Frequenz (df) positiv ist.

4. Verfahren nach Anspruch 1, dadurch gekennzeichnet, daß der Übergang von einem Arbeitspunkt (U1, f1) zu einem anderen Arbeitspunkt (U2, f2) aufgrund der Weisungen durch den Benutzer (1216) ohne Präferenzreihenfolge zwischen der Veränderung (df) der Frequenz und der Veränderung (dU) der Spannung erfolgt, wenn die Veränderung der Frequenz (df) positiv und betragsmäßig gering ist.

5. Verfahren nach Anspruch 1, dadurch gekennzeichnet, daß der Übergang von einem Arbeitspunkt (U1, f1) auf einen anderen Arbeitspunkt (U2, f2) aufgrund der Veränderung der Applikation (27) selbst erfolgt.

6. Verfahren nach einem beliebigen der Ansprüche 1 oder 3 bis 5, dadurch gekennzeichnet, daß die Anfahrphase bis zum ersten Dauerbetriebszustand durch Verringerung (df) der Frequenz der Spannung (Um) in einem oder in mehreren Schritten erfolgt.

7. Verfahren nach einem der Ansprüche 2 oder 6, dadurch gekennzeichnet, daß die Entscheidung über das Ende der Anfahrphase getroffen wird, wenn der Strom durch die Last (23, 125) abnimmt.

8. Verfahren nach einem der Ansprüche 2 oder 6, dadurch gekennzeichnet, daß, wenn die Last einen induktiven Charakter besitzt und ein variabler oder nicht variabler statischer Transformator oder auch ein Transformator ist, der einen oder mehrere elektrische Motoren speist, die erste Inbetriebnahme eine Pufferphase enthält, die der Prozedur der Dauerbetriebszustände vorausgeht und bei der an die Last (23, 125) eine Spannung entsprechend einem Arbeitspunkt (D) angelegt wird, deren Leistung die höchste ist, die im Dauerbetrieb erreicht werden kann.

9. Verfahren nach einem der Ansprüche 2 oder 6, dadurch gekennzeichnet, daß, wenn die Last ein elektrischer Motor ist, die Anlaufphase eine Pufferphase zwischen der Beschleunigungsphase und der Dauerbetriebsprozedur enthält, während der an den Motor (125) eine Spannung entsprechend dem Drehmoment des Arbeitspunkts (D) angelegt wird, das das höchstmögliche Drehmoment ist, das bei der in den Dauerbetriebszuständen erforderlichen Drehgeschwindigkeit erreicht werden kann.

10. Verfahren nach einem beliebigen der vorhergehenden Ansprüche, dadurch gekennzeichnet, daß die induktive Last (23, 125) ein asynchroner, synchroner, synchronisierter asynchroner, einphasiger oder mehrphasiger Wechselstrommotor oder ein variabler oder nicht variabler statischer Transformator ist.

11. Verfahren nach einem beliebigen der vorhergehenden Ansprüche, dadurch gekennzeichnet, daß die Form der an die Klemmen der Last gelieferten Welle ein gleichschenkliges Trapez ist, deren Maximalwert eine Dauer von T/6 besitzt, wobei T die Periode der synthetisierten Welle an den Klemmen der Last ist.

12. Vorrichtung zur optimalen Speisung einer Last (23, 125) mit induktivem Charakter, die an eine Applikation (27) gekoppelt ist, wobei die Vorrichtung das Verfahren gemäß einem beliebigen der obigen Ansprüche implementiert und einen statischen Frequenzwandler (122, 124) in Form eines aktiven Filters (122) an den Klemmen eines statischen Wechselrichters (124) und einen elektronischen Steuermodul (123) zur Steuerung des Wandlers besitzt, dadurch gekennzeichnet, daß der Wandler ein aktives Filter (123) zur Spannungserhöhung ist, das von einener Induktivität in Reihe mit einer Diode (D1) gebildet wird, wobei der Verbindungspunkt zwischen Induktivität und Diode über einen ersten Unterbrecher (K5) an Masse liegt, daß das Wechselrichtermittel (124) aus mindestens einer vollständigen Brücke besteht, deren einer Zweig zwei Kondensatoren (C1, C2) und deren anderer Zweig zwei Unterbrecher (K1, K2) enthält, daß der elektronische Modul (123) so angeschlossen ist, daß er alle Unterbrecher (K1, K2) steuert, wobei der Modul hierzu erste Mittel zur Messung von Kontrollparametern (PC) an der Last, am statischen Wandler oder an der Speisequelle, zweite Mittel, um eine Verknüpfung und/oder Gewichtung der Kontrollparameter durchzuführen und die Variationsrichtung eines oder mehrerer der gewichteten und/oder verknüpften Kontrollparameter um einen Extremwert entsprechend einer minimalen von der Last (23, 125) absorbierten Leistung abzuleiten, und dritte Mittel aufweist, um dem Wandler Regelparameter (26) zu liefern, mit denen der erste Unterbrecher (K5) zur Regelung der von dem aktiven Filter gelieferten Gleichspannung (E) größer oder gleich dem Spitzenwert der Spannung der Speisequelle (21) auf einen Wert gesteuert wird, der abhängig vom Verformungsgrad der Spannung an den Klemmen des Motors und von der Minimierung der Verluste in den Leistungsbauelementen des Wandlers entsprechend der minimalen Gleichspannung (E)gewählt wird, und mit denen die weiteren Unterbrecher (K1, K2) zur Regelung der als Lastspannung (Um) vom Wechselrichter an die Last gelieferten Teils der Gleichspannung (E) gesteuert werden, sodaß die Lastspannung (Um) die von der Last aufgenommene Leistung minimiert, und daß ein Kondensator (CO) zwischen der Eingangsklemme des aktiven Filters (122) und Masse liegt.

13. Vorrichtung nach Anspruch 12, dadurch gekennzeichnet, daß das Wechselrichtermittel (124) nur eine vollständige Brücke enthält und eine einphasige Last (5) speist.

14. Vorrichtung nach Anspruch 12, dadurch gekennzeichnet, daß das Wechselrichtermittel (4) zwei vollständige Brücken enthält und eine zweiphasige Last speist.

15. Vorrichtung nach einem beliebigen der Ansprüche 12 bis 14, dadurch gekennzeichnet, daß sie Anschlußmittel (1212) besitzt, um dem Modul (123) die Kontrollparameter (PC) zu liefern, die von der durch die Last (125) absorbierten Leistung, dem die Last durchquerenden Strom, den Veränderungen der Spannung (dV1, dV2) an den Klemmen der Kondensatoren (C1, C2) und/oder dem Bildwert der Verformung (dUmBF) der Niederfrequenzkomponente (UmBF) der Spannung an den Klemmen der Last (125) gebildet werden.

16. Vorrichtung nach einem beliebigen der Ansprüche 12 bis 15, dadurch gekennzeichnet, daß der elektronische Modul (23) so ausgebildet ist, daß er vor der Phase der ersten Inbetriebnahme entweder nur auf den Unterbrecher (K5) des aktiven Filters (122) einwirkt, während die Unterbrecher (K1, K2) des Wechselrichtermittels (124) offen sind, oder auf kombinierte Art den Unterbrecher (K5) des aktiven Filters (122) und die Unterbrecher (K1, K2) des Wechselrichtermittels (124) so steuert, daß die Kondensatoren (C1, C2) auf eine genaue Spannung (E) vorgeladen werden, die von der Speisespannung unabhängig ist, und an die Last eine Welle mit dem zyklischen Schaltverhältnis 1/2 geliefert wird.

17. Vorrichtung nach Anspruch 16, dadurch gekennzeichnet, daß der elektronische Modul (123) so ausgebildet ist, daß das Vorladen der Kondensatoren (C1, C2) so gewählt ist, wie es notwendig ist, um das Widerstandsmoment beim Anfahren zu überwinden, wenn die Last ein Elektromotor ist.

## Claims

1. Method of supplying optimal power for an inductive-type load (23; 125) coupled to an application (27), this load (23; 125) being driven by a static converter (122, 124) controlled by an electronic module (123) constituting the electronic load control device, the said converter comprising an inverter (124) supplied with power by an active filter (122), the said method consisting in measuring monitoring parameters (PC) on the said load, the said static converter or a power supply source (21), in combining and/or weighting the said monitoring parameters and in deducing therefrom parameters for adjusting the power supply on the basis of predetermined criteria, the said method being characterized in that it includes the steps consisting in:
- deducing the direction of variation, about an extremum corresponding to a minimum power absorbed by the load (23; 125), of one or more of the said weighted and/or combined monitoring parameters; and
- determining adjusting parameters on the basis of the said direction of variation in such a way as, at each instant:
. to adjust the voltage (E) delivered by the said active filter, greater than or equal to the peak voltage of the power supply source (21), to a value chosen as a function of the degree of deformation of the voltage across the terminals of the motor and of the minimization of the losses in the power elements of the converter corresponding to the minimum DC voltage (E) ; and
. to adjust the percentage of the DC voltage (E) delivered as charging voltage (Um) by the said inverter to the said load in such a way that the said charging voltage (Um) renders the power absorbed by the said load a minimum.

2. Method according to Claim 1, characterized in that the starting phase for reaching the first steady-state regime is implemented by increasing (df) the frequency of the said voltage (Um) delivered to the load, in one or more steps.

3. Method according to Claim 1, characterized in that the changing from one operating point (U1, f1) to another (U2, f2) on demand by the user (1216) is carried out by alteration (df) of the frequency of the said voltage (Um), then by alteration (dU) of the voltage if the frequency variation (df) is negative, and by modification (dU) of the voltage, then by modification (df) of the frequency if the frequency variation (df) is positive.

4. Method according to Claim 1, characterized in that the changing from one operating point (U1, f1) to another (U2, f2) on demand by the user (1216) is carried out without an order of preference between the variation (df) of the frequency and that (dU) of the voltage when the frequency variation (df) is positive and weak in value.

5. Method according to Claim 1, characterized in that the changing from one operating point (U1, f1) to another (U2, f2) is carried out by modification of the application (27) itself.

6. Method according to any one of Claims 1 or 3 to 5, characterized in that the starting phase for reaching the first steady-stage regime is carried out by reducing (df) the frequency of the said voltage (Um), in one or more steps.

7. Method according to either of Claims 2 and 6, characterized in that the end-of-starting-phase decision is taken when the current through the load (23, 125) decreases.

8. Method according to either of Claims 2 and 6, characterized in that, when the load exhibits an inductive nature of the static converter type, whether variable or not, or even a transformer supplying one or more electric motors, putting into operation for the first time includes a buffer phase preceding the procedure for the steady-state regimes, during which a voltage corresponding to an operating point (D) the power of which is the highest likely to be reached in steady-state regime is applied to this load (23, 125).

9. Method according to either of Claims 2 and 6, characterized in that, when the load is an electric motor, the starting includes a buffer phase between the acceleration phase and the procedure for the steady-state regimes, during which a voltage corresponding to the torque of the operating point (D) which is the highest torque likely to be reached at the rotation speed required in steady-state regimes is applied to the motor (125).

10. Method according to any one of the preceding claims, characterized in that the inductive-type load (23, 125) to which it is applied is an asynchronous, synchronous, synchronized asynchronous alternatingcurrent electric motor, with or without a variable-reluctance type contribution, single phase or multiphase, or a static transformer, whether variable or not.

11. Method according to any one of the preceding claims, characterized in that the waveform delivered to the terminals of the load has the shape of an isosceles trapezoid the plateau of which has a duration of T/6, T being the period of the synthesized wave at the terminals of the load.

12. Device for supplying optimal power for a load (23; 125) of inductive nature coupled to an application (27), the said device implementing the method according to any one of the preceding claims and comprising a static frequency converter (122, 124) formed by an active filter (122) across the terminals of an inverter means (124) and an electronic control module (123) controlling the said converter, characterized in that the said active filter is a voltage-raising active filter (122) which consists of an inductor (L1) in series with a diode (D1), the junction point between inductor and diode being linked to earth by a first switch (K5), in that the said inverter means (124) consists of at least one complete bridge, one of whose arms includes two capacitors (C1, C2) and the other arm two switches (K1, K2), in that the said electronic module (123) is connected up so as to control all the said switches (K1, K2, K5), the said module including for this purpose first means for measuring monitoring parameters (PC) on the said load, the said static converter or the said power supply source, second means for combining and/or weighting the said monitoring parameters and deducing the direction of variation, about an extremum corresponding to a minimum power absorbed by the load (23; 125), of one or more of the said weighted and/or combined monitoring parameters, and third means for providing the said converter with adjusting parameters (26) controlling the said first switch (K5) so as to adjust the DC voltage (E) delivered by the said active filter, greater than or equal to the peak voltage of the power supply source (21), to a value chosen as a function of the degree of deformation of the voltage across the terminals of the motor and of the minimization of the losses in the power elements of the converter corresponding to the minimum DC voltage (E), and the said other switches (K1, K2) for adjusting the percentage of the DC voltage (E) delivered as charging voltage (Um) by the said inverter to the said load in such a way that the charging voltage (Um) renders the power absorbed by the said load a minimum, and in that a capacitor (CO) is linked between the input terminal of the active filter (122) and earth.

13. Device according to Claim 12, characterized in that the inverter means (124) includes only one complete bridge and supplies power for a single-phase load (5).

14. Device according to Claim 12, characterized in that the inverter means (4) includes two complete bridges and supplies power for a two-phase load.

15. Device according to any one of Claims 12 to 14, characterized in that it comprises connection means (1212) for supplying to the said module (123) the said monitoring parameters (MP) consisting of the power absorbed by the load (125), the current passing through the said load, the voltage variations (dV1, dV2) at the terminals of the said capacitors (C1, C2) and/or the value which is the image of the distortion (dUmLF) of the low-frequency component (UmLF) of the voltage at the terminals of the load (125).

16. Device according to any one of Claims 12 to 15, characterized in that the said electronic module (123) is constructed so as, before the first switch-on phase, either to act only on the switch (K5) of the active filter (122) while holding the switches (K1, K2) of the inverter means (124) open, or to act in a combined manner on the switch (K5) of the active filter (122) and on the switches (K1, K2) of the inverter means (124) in such a way as to precharge the said capacitors (C1, C2) to a right voltage (E) independent of the power supply source and to deliver a wave with duty cycle 1/2 to the load.

17. Device according to Claim 16, characterized in that the said electronic module (123) is provided so that the said precharging of the capacitors (C1, C2) is that required to overcome the opposing torque on starting when the said load is an electric motor.
